# EUROPÄISCHE PATENTSCHRIFT

(11) **EP 4 543 616 B1**
(45) Veröffentlichungstag und Bekanntmachung des Hinweises auf die Patenterteilung: **11.03.2026**
(21) Anmeldenummer: 24722570.9
(22) Anmeldetag: 26.04.2024
(51) Int. Cl.: B23K 26/03, B23K 26/38

(54) **VERFAHREN ZUM SCHNEIDEN VON PLATINEN MIT EINER VORGEGEBENEN SOLL-KONTUR UND TEMPERATURKOMPENSATION**
METHOD FOR CUTTING BLANKS HAVING A PREDETERMINED DESIRED CONTOUR AND TEMPERATURE COMPENSATION
PROCÉDÉ DE COUPE D'ÉBAUCHES PRÉSENTANT UN CONTOUR ET UNE COMPENSATION DE TEMPÉRATURE SOUHAITÉS PRÉDÉTERMINÉS

(30) Priorität: 16.05.2023 DE 102023112933
(43) Veröffentlichungstag der Anmeldung: 30.04.2025
(73) Patentinhaber: ANDRITZ Schuler Pressen GmbH, 73033 Göppingen (DE)
(72) Erfinder: SEITZ, Alexander, 91054 Erlangen (DE); CISAR, Rolf, 91238 Engelthal (DE)
(74) Vertreter: Dr. Gassner & Partner mbB
(86) Internationale Anmeldenummer: PCT/EP2024/061563
(87) Internationale Veröffentlichungsnummer: WO 2024/235612

(56) Entgegenhaltungen:
- WO-A1-2010/044067
- WO-A1-2016/135350

## Beschreibung

Die Erfindung betrifft ein Verfahren zum Schneiden von Platinen mit einer vorgegebenen Soll-Kontur nach dem Oberbegriff des Patentanspruchs 1.

Ein solches Verfahren ist beispielsweise aus der WO 2016/135350 A1 bekannt.

Nach dem bekannten Verfahren werden Blechplatinen bzw. Platinen aus einem in eine Transportrichtung kontinuierlich transportierten Blechband mittels mehrerer hintereinander angeordneter Laserschneideinrichtungen geschnitten. Dabei erzeugt jede der Laserschneideinrichtungen einen Teilschnitt entlang eines vorgegebenen Schneidwegs. Der Schneidweg ist durch Schneidwegkoordinaten definiert. In der Praxis kann es sein, dass das Blechband nicht exakt in Transport- bzw. x-Richtung transportiert wird. Infolgedessen ist es erforderlich, die Schneidwegkoordinaten zu korrigieren. Dazu werden die Koordinaten eines Punkts einer Oberfläche des Blechbands bezüglich eines Referenzpunkts bestimmt. Ferner ist zur Bestimmung der zu korrigierenden Schneidwegkoordinaten eine Wegmesseinrichtung zur Messung eines Transportwegs des Blechbands vorgesehen.

Das bekannte Verfahren ermöglicht eine relativ genaue Korrektur eines Schneidwegs, so dass Enden der eine Platine umgebenden Teilschnitte weitgehend exakt ineinander übergehen. Eine Nachbearbeitung der Platine im Bereich überlappender Enden von Teilschnitten kann nach dem bekannten Verfahren mit erheblich verringertem Aufwand durchgeführt werden.

Bisher wurden mittels Laserschneidverfahren aus einem kontinuierlich transportierten Blechband üblicherweise Platinen aus Aluminium- oder Stahlblech hergestellt. Eine eventuell erforderliche Nachbearbeitung derartiger Platinen war mit vertretbarem Aufwand möglich. Bei Blechen mit hoher Festigkeit war das nicht ohne weiteres möglich.

Neuerdings gibt es die Anforderung, Bleche herzustellen, deren Kontur zumindest abschnittsweise exakt einer vorgegebenen Soll-Kontur entsprechen.

Aufgabe der Erfindung ist es, die Nachteile nach dem Stand der Technik zu beseitigen. Es soll insbesondere ein Verfahren zur Herstellung von Platinen angegeben werden, welche einer vorgegebenen Soll-Kontur weitgehend exakt entsprechen.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

### Definitionen:

Transportweg (xₐ):
   Vorschubweg des Blechbands in Transport- bzw. x-Richtung. Der Transportweg xₐ ist gebildet aus aufeinanderfolgenden Transportwegdaten. Die Transportwegdaten werden mittels eines ersten Algorithmus (siehe unten) berechnet.
Schneidweg (xy):
   Der Schneidweg xy wird aus CAD-Daten berechnet, welche die Soll-Kontur der Platine beschreiben. Die Berechnung erfolgt mittels des ersten Algorithmus. Jedem Transportwegdatum wird dabei genau ein Schneidwegkoordinatenpaar zugeordnet. Das Schneidwegkoordinatenpaar dient zur Steuerung einer xy-Bewegungseinrichtung, z. B. einer Gantry, an welcher ein Schneidlaser befestigt ist. Der Schneidweg xy kann zur Erzeugung von Teilschnitten auch in mehrere Schneidwegabschnitte unterteilt sein. In diesem Fall können die jeweiligen Schneidwegabschnitte mittels unterschiedlicher Schneidlaser geschnitten werden. Beispielsweise können ein erster Schneidwegabschnitt mittels eines ersten Schneidlasers und ein zweiter Schneidwegabschnitt mittels eines stromabwärts des ersten Schneidlasers angeordneten zweiten Schneidlasers geschnitten werden.
Laserschneideinrichtung (LS):
   umfasst zumindest einen Schneidlaser, der an einer xy-Bewegungseinrichtung aufgenommen und in x-Richtung sowie einer senkrecht dazu verlaufenden y-Richtung computergesteuert bewegbar ist.
Arbeitsbereich (A1, A2):
   xy-Bereich, in welchem ein Schneidlaser Schneidwege bzw. Schneidwegabschnitte erzeugen kann.
Referenz-Temperatur (TR):
   Temperatur, bei welcher die Platine die vorgegebene Soll-Kontur aufweist, beispielsweise die Temperatur eines Messraums, in dem die Soll-Kontur der Platine vermessen wird.
Erste aktuelle Temperatur (T1):
   aktuelle Temperatur des Blechbands; vorzugsweise erfolgt die Messung der ersten aktuellen Temperatur stromaufwärts eines Schneidlasers der Laserschneideinrichtung.
Erster Algorithmus:
   Berechnet aus CAD-Daten und Prozessparametern den Transportweg (xₐ) und xy-Werte, welche den Schneidweg beschreiben.
Zweiter Algorithmus:
   Berechnet aus den xy-Werten und der ersten aktuellen Temperatur (T1) korrigierte xy-Werte, welche der xy-Bewegungseinrichtung zur Bewegung des Schneidlasers entlang eines korrigierten Schneidwegs (xy-korr) bereitgestellt werden.
Dritter Algorithmus:
   Berechnet aus dem Transportweg (xₐ) und der ersten aktuellen Temperatur (T1) einen korrigierten Transportweg (xₐ-korr).
x- bzw. y-Messeinrichtung (LX1, LX2, LY1, LY2):
   Einrichtung zur Bestimmung einer Position bzw. Messen eines Abstands eines Schneidlasers in x- bzw. y-Richtung, z. B. eine Linearmesseinrichtung mit Glasstab.
x- bzw. y-Referenzpunkt (RX1, RX2, RY1, RY2):
   vorgegebener Bezugspunkt der x- bzw. y-Messeinrichtung, z. B. Befestigungspunkt der x- bzw. y-Messeinrichtung an einem Maschinengestell.
Maschinengestell:
   Rahmen, an dem die Laserschneideinrichtung befestigt ist.
Maschinengestell-Referenzpunkt (RMG):
   vorgegebener Bezugspunkt am Maschinengestell.
Zweite aktuelle Temperatur (T2):
   Temperatur, welche im Bereich der Laserschneideinrichtung gemessen wird. Die Messung der zweiten aktuellen Temperatur dient der Bestimmung der Temperatur des Maschinengestells; sie kann unmittelbar am Maschinengestell und/oder mittelbar in der Umgebung des Maschinengestells gemessen werden.
Erste Kalibrier-Temperatur (TK1):
   vorgegebene Temperatur, bei welcher die x- und y-Messeinrichtungen bezüglich des Maschinengestell-Referenzpunks (RMG) einen vorbekannten Abstand haben.
Zweite/dritte Kalibrier-Temperatur (TK2/TK3):
   gerätespezifische Temperaturen, für welche mit den x-Messeinrichtungen durchgeführte Abstandsmessungen kalibriert sind.
Vierte/fünfte Kalibrier-Temperatur (TK4/TK5):
   gerätespezifische Temperaturen, für welche mit den y-Messeinrichtungen durchgeführte Abstands-Messungen kalibriert sind.
Sechste Kalibrier-Temperatur (TK6):
   vorgegebene Temperatur, bei welcher ein Fixpunkt eines Bandkantensensors bezüglich des Maschinengestell-Referenzpunkts (RMG) einen vorbekannten Abstand hat.
Siebte Kalibrier-Temperatur (TK7):
   gerätespezifische Temperatur, für welche ein mit dem Messrad gemessener Weg kalibriert ist.
Dritte aktuelle Temperatur (T3):
   Temperatur, welche im Bereich der Wegmesseinrichtung gemessen wird. Die Messung der dritten aktuellen Temperatur dient der Bestimmung der Temperatur des Wegmesseinrichtung; sie kann unmittelbar an der Wegmesseinrichtung und/oder mittelbar in der Umgebung des Wegmesseinrichtung gemessen werden.
Soll-Kontur:
   Die Soll-Kontur ist die Umrisslinie einer einzigen Platine in Draufsicht. Die Soll-Kontur einer Platine wird üblicherweise durch CAD-Daten definiert, welcher als Datensatz vorliegt. Die Soll-Kontur bezieht sich in der Regel auf eine Referenz-Temperatur von 20 °C. D. h. eine Platine entspricht genau dann der Soll-Kontur, wenn sie eine Temperatur von 20 °C aufweist.

Laserschneidanlagen zum Schneiden von Platinen aus einem kontinuierlich in Transportrichtung transportierten Blechband weisen meist eine erhebliche Länge von 5 m oder mehr auf. Solche Laserschneidanlagen sind üblicherweise in großen Hallen aufgestellt, in denen die hergestellten Platinen auf Förderwegen abtransportiert und zwischengelagert werden. Solche Hallen werden üblicherweise nicht auf einer bestimmten vorgegebenen Temperatur gehalten. Die Hallen können mit Fenstern versehen sein, durch welche Sonnenlicht auf Abschnitte der Laserschneidanlage/n fällt. Entlang einer Laserschneidanlage herrscht mitunter eine unterschiedliche Temperatur. Blech-Coils werden häufig aus Lagerhallen herbeigeschafft, welche wiederum eine Temperatur aufweisen, welche verschieden zu der Temperatur der Laserschneidanlage ist. Insgesamt gesehen ergeben sich zwischen dem Blech-Coil und einem stromabwärtigen Ende des Blechbands Temperaturfluktuationen, welche einer hochpräzisen Herstellung von Platinen mit einer vorgegebenen Soll-Kontur entgegenwirken.

Das vorgeschlagene Verfahren ist auf der Grundlage dieser Erkenntnis geschaffen worden. Erfindungsgemäß wird vorgeschlagen,
dass die Soll-Kontur auf genau eine Referenz-Temperatur der Platine bezogen wird,
dass eine erste aktuelle Temperatur des Blechbands gemessen wird,
dass zur Herstellung der Soll-Kontur der Schneidweg in einem zweiten Algorithmus in Abhängigkeit der ersten aktuellen Temperatur bezüglich der Referenz-Temperatur in einen korrigierten Schneidweg korrigiert wird, und
dass der Transportweg des Blechbands nach einem dritten Algorithmus in Abhängigkeit der ersten aktuellen Temperatur bezüglich der Referenz-Temperatur in einen korrigierten Transportweg korrigiert wird.

Nach dem erfindungsgemäßen Verfahren wird bezüglich der Soll-Kontur auf genau eine vorgegebene Referenz-Temperatur abgestellt. Diese Referenz-Temperatur kann beispielsweise diejenige Temperatur sein, bei welcher die Soll-Kontur durch die CAD-Daten beschrieben wird. Das können beispielsweise 20 °C sein.

Aus den CAD-Daten werden nach dem ersten Algorithmus Schneidwegkoordinaten bzw. Maschinen-Koordinaten erzeugt, welche den Schneidweg (xy) beschreiben. Ferner werden korrespondiere Transportwegdaten erzeugt, welche den Transportweg bzw. einen Soll-Transportweg beschreiben. Aus dem ersten Algorithmus ergibt sich vorteilhafterweise eine Tabelle, in der jedem Transportwegdatum jeweils die dazu korrespondierenden xy-Werte zugeordnet sind. Jedes Transportwegdatum weist bezüglich einem darauffolgenden Transportwegdatum einen vorgegebenen Abstand auf. Zwischen zwei aufeinanderfolgenden Transportwegdaten wird bezüglich der dazu korrespondierenden xy-Werte interpoliert.

Erfindungsgemäß wird eine erste aktuelle Temperatur des Blechbands gemessen. Mittels eines zweiten Algorithmus werden sodann die den Schneidweg (xy) beschreibenden Schneidwegkoordinaten bzw. der Schneidweg (xy) in Abhängigkeit der ersten aktuellen Temperatur bezüglich der Referenz-Temperatur in einen korrigierten Schneidweg (xy-korr) korrigiert. Eine beispielsweise bei einer Temperatur von 30 °C gemäß dem korrigierten Schneidweg hergestellte Kontur einer Platine ist größer als die Soll-Kontur. Erst wenn eine solche Platine auf die Referenz-Temperatur abgekühlt wird, ändert sich ihre Dimension, so dass sie der Soll-Kontur entspricht.

Nach weiterer Maßgabe der Erfindung wird der Transportweg des Blechbands nach einem dritten Algorithmus in Abhängigkeit der ersten aktuellen Temperatur bezüglich der Referenz-Temperatur in einen korrigierten Transportweg korrigiert. Damit wird dem Umstand Rechnung getragen, dass sich das Blechband stromaufwärts der Laserschneideinrichtung wegen einer von der Referenz-Temperatur abweichenden Temperatur in seiner Länge ändert. Wegen der erfindungsgemäß vorgeschlagenen Korrektur der den Transportweg beschreibenden Transportwegdaten wird sichergestellt, dass die erforderlichen Schnitte tatsächlich innerhalb eines Arbeitsbereichs der Laserschneideinrichtung ausgeführt werden können. Ohne die vorgeschlagene Korrektur des Transportwegs kann es sein, dass sich Schnitte oder Teilschnitte innerhalb der Laserschneideinrichtung verschieben und damit die gewünschten Schnitte bzw. Teilschnitte innerhalb des jeweiligen Arbeitsbereichs nicht mehr möglich sind.

Die Korrektur des Schneidwegs und die weitere Korrektur des Transportwegs ermöglichen die Herstellung einer Platine, die jeweils exakt die vorgegebene Soll-Kontur aufweist. Nach dem vorgeschlagenen Verfahren können eine Vielzahl von solchen Platinen sehr effizient aus einem kontinuierlich bewegten Blechband hergestellt werden.

Nach einer vorteilhaften Ausgestaltung kann die Laserschneideinrichtung einen ersten Arbeitsbereich aufweisen, wobei der erste Arbeitsbereich eine erste x-Messeinrichtung zur Bestimmung einer x-Position eines ersten Schneidlasers aufweist, wobei der ersten x-Messeinrichtung ein erster x-Referenzpunkt zugewiesen wird, wobei im Bereich der Laserschneideinrichtung eine zweite aktuelle Temperatur gemessen wird, und wobei ein x-Abstand zwischen dem ersten x-Referenzpunkt und einem Maschinengestell-Referenzpunkt in Abhängigkeit der zweiten aktuellen Temperatur bezüglich einer vorgegebenen ersten Kalibrier-Temperatur korrigiert wird.

Eine Laserschneideinrichtung umfasst einen ersten Schneidlaser, welcher z. B. an einer Gantry angebracht ist. Mittels der Gantry kann der erste Schneidlaser in einem ersten Arbeitsbereich in x-Richtung und in y-Richtung hin und her bewegt werden. Die Laserschneideinrichtung weist ferner ein Gehäuse auf, in welchem der zumindest eine Schneidlaser untergebracht ist. Das Gehäuse dient im Wesentlichen dazu, einen unerwünschten Austritt von Laserstrahlen in die Umgebung zu verhindern. Wegen des Gehäuses herrscht innerhalb der Laserschneideinrichtung mitunter eine andere Temperatur als in der Umgebung. Infolgedessen ergeben sich auch im Bereich der Laserschneideinrichtung temperaturbedingte Abweichungen, insbesondere bei der Positionierung der Schneidlaser. Zur Korrektur solcher Abweichungen wird vorgeschlagen, im Bereich der Laserschneideinrichtung eine zweite aktuelle Temperatur zu messen. Die Position eines Schneidlasers in x-Richtung wird durch eine erste x-Messeinrichtung gemessen. Die x-Messeinrichtung ist an einem Punkt fest mit dem Maschinengestell verbunden. Am Maschinengestell ist ein Maschinengestell-Referenzpunkt definiert. Ein Abstand zwischen dem Maschinengestell-Referenzpunkt und dem Befestigungspunkt der x-Messeinrichtung am Maschinengestell ist für eine erste Kalibrier-Temperatur exakt bekannt. Die x-Messeinrichtung misst x-Werte exakt, wenn die erste Kalibier-Temperatur herrscht. Änderungen des Abstands infolge einer von der ersten Kalibrier-Temperatur abweichenden zweiten aktuellen Temperatur werden entsprechend der vorgeschlagenen vorteilhaften Ausgestaltung kompensiert, indem ein x-Abstand zwischen dem ersten x-Referenzpunkt und einem Maschinengestell-Referenzpunkt in Abhängigkeit der zweiten aktuellen Temperatur bezüglich der vorgegebenen ersten Kalibrier-Temperatur korrigiert wird.

Die Laserschneideinrichtung kann nicht nur einen Schneidlaser, sondern auch mehrere Schneidlaser aufweisen. Vorteilhafterweise weist die Laserschneideinrichtung stromabwärts des ersten Arbeitsbereichs einen zweiten Arbeitsbereich auf, wobei der zweite Arbeitsbereich eine zweite x-Messeinrichtung zur Bestimmung einer x-Position eines zweiten Schneidlasers aufweist, wobei der zweiten x-Messeinrichtung ein zweiter x-Referenzpunkt zugewiesen wird, wobei ein x-Abstand zwischen dem zweiten x-Referenzpunkt und dem Maschinengestell-Referenzpunkt in Abhängigkeit der zweiten aktuellen Temperatur bezüglich der ersten Kalibrier-Temperatur korrigiert wird.

Abgesehen von der ersten Kalibrier-Temperatur weist jede x-Messeinrichtung eine gerätespezifische Kalibrier-Temperatur auf, für welche die von der jeweiligen x-Messeinrichtung gelieferten x-Werte Gültigkeit haben. Sofern x-Messeinrichtungen sich auf einer Temperatur befinden, welche von der jeweiligen gerätespezifischen Kalibrier-Temperatur abweicht, müssen die davon gelieferten x-Werte korrigiert werden. Wenn beispielsweise als x-Messeinrichtung ein Linearmaßstab verwendet wird, ist eine Länge des Linearmaßstabs auf eine zweite Kalibrier-Temperatur kalibriert. Dementsprechend wird vorteilhafterweise vorgeschlagen, dass die erste x-Messeinrichtung eine vorgegebene zweite Kalibrier-Temperatur aufweist und unter Verwendung der zweiten aktuellen Temperatur bezüglich der zweiten Kalibrier-Temperatur korrigiert wird und/oder die zweite x-Messeinrichtung eine vorgegebene dritte Kalibrier-Temperatur aufweist und unter Verwendung der zweiten aktuellen Temperatur bezüglich der dritten Kalibrier-Temperatur korrigiert wird.

Die vorgeschlagenen Korrekturen der x-Messeinrichtung/en tragen zu einer besonders exakten Herstellung von Platinen gemäß der Soll-Kontur bei.

Entsprechend den vorgeschlagenen Korrekturen der x-Messeinrichtungen können in analoger Weise vorteilhafterweise auch erste und/oder zweite y-Messeinrichtungen korrigiert werden. Dazu kann der erste Arbeitsbereich eine erste y-Messeinrichtung zur Bestimmung einer y-Position eines ersten Schneidlasers aufweisen, wobei der ersten y-Messeinrichtung ein erster y-Referenzpunkt zugewiesen wird, und wobei ein y-Abstand zwischen dem ersten y-Referenzpunkt und dem Maschinengestell-Referenzpunkt in Abhängigkeit der zweiten aktuellen Temperatur bezüglich der ersten Kalibrier-Temperatur korrigiert wird. Nach der vorgeschlagenen Ausgestaltung wird die erste y-Messeinrichtung analog zur ersten x-Messeinrichtung bezüglich ihres ersten y-Referenzpunkts und dem Maschinengestell-Referenzpunkt in Abhängigkeit der zweiten aktuellen Temperatur bezüglich der ersten Kalibrier-Temperatur korrigiert.

Vorteilhafterweise weist der zweite Arbeitsbereich eine zweite y-Messeinrichtung zur Bestimmung einer y-Position des zweiten Schneidlasers auf, wobei der zweiten y-Messeinrichtung ein zweiter y-Referenzpunkt zugewiesen wird, wobei ein y-Abstand zwischen dem zweiten y-Referenzpunkt und dem Maschinengestell-Referenzpunkt in Abhängigkeit der zweiten aktuellen Temperatur bezüglich der ersten Kalibrier-Temperatur korrigiert wird.

Analog zu den x-Messeinrichtungen können auch die y-Messeinrichtungen gerätespezifische Kalibrier-Temperaturen aufweisen, für welche sie exakt y-Messwerte liefern. Bei einer Abweichung von diesen spezifischen Kalibrier-Temperaturen müssen die gelieferten y-Messwerte korrigiert werden. Vorteilhafterweise weist die erste y-Messeinrichtung eine vorgegebene vierte Kalibrier-Temperatur auf und die erste y-Messeinrichtung wird unter Verwendung der zweiten aktuellen Temperatur bezüglich der vierten Kalibrier-Temperatur korrigiert und/oder die zweite y-Messeinrichtung weist eine vorgegebene fünfte Kalibrier-Temperatur auf und die zweite y-Messeinrichtung wird unter Verwendung der zweiten aktuellen Temperatur bezüglich der fünften Kalibrier-Temperatur korrigiert. Das ermöglicht eine besonders exakte Herstellung von Platinen entsprechend ihrer vorgegebenen Soll-Kontur.

Nach einer weiteren vorteilhaften Ausgestaltung werden zur Messung einer oder mehrerer der aktuellen Temperaturen mehrere Temperatursensoren verwendet und als aktuelle Temperatur wird ein Durchschnittswert aus den mit den Temperatursensoren gemessenen Werten verwendet. Damit kann weiter die Präzision des vorgeschlagenen Verfahrens erhöht werden.

Nach einer weiteren vorteilhaften Ausgestaltung sind Bandkantensensoren zur Erfassung der y-Positionen von Bandkanten des Blechbands vorgesehen, wobei die Bandkantensensoren mit einer Vorrichtung zum Verstellen der jeweiligen Messposition in y-Richtung versehen sind, wobei die Messpositionen der Bandkantensensoren in Abhängigkeit der zweiten aktuellen Temperatur bezüglich einer sechsten Kalibrier-Temperatur korrigiert werden. Bandkantensensoren weisen üblicherweise einen relativ kleinen Messbereich auf. Ihre Messposition kann mittels einer Vorrichtung zum Verstellen der jeweiligen Messposition in y-Richtung verstellt werden. Unter dem Begriff "Messposition" wird ein Fixpunkt des jeweiligen Bandkantensensors bezüglich des Maschinengestell-Referenzpunkts verstanden. Die Messpositionen der Bandkantensensoren können vorteilhafterweise in Abhängigkeit der zweiten aktuellen Temperatur bezüglich der sechsten Kalibrier-Temperatur korrigiert werden. D. h. ein Abstand zwischen dem Maschinengestell-Referenzpunkt und der jeweiligen Messposition in y-Richtung wird in Abhängigkeit der zweiten aktuellen Temperatur bezüglich der sechsten Kalibrier-Temperatur korrigiert.

Zweckmäßigerweise wird ein tatsächlicher Transportweg mittels einer Weg-Messeinrichtung gemessen und der tatsächliche Transportweg als Ist-Wert zur Regelung des Transportwegs verwendet. Als Weg-Messeinrichtung wird beispielsweise ein Messrad verwendet, wobei ein Durchmesser des Messrads in Abhängigkeit einer dritten aktuellen Temperatur bezüglich einer vorgegebenen siebten Kalibrier-Temperatur korrigiert wird. Zur Korrektur der vom Messrad gelieferten x-Werte wird eine dritte aktuelle Temperatur des Messrads gemessen. Ein Durchmesser des Messrads wird bezüglich einer für das Messrad vorgegebenen siebten Kalibrier-Temperatur korrigiert. Damit wird sichergestellt, dass die vom Messrad gelieferten x-Werte bezüglich Temperaturfluktuationen korrigiert werden.

Die erste und/oder dritte aktuelle Temperatur wird/werden zweckmäßigerweise stromaufwärts der Laserschneidvorrichtung gemessen. Damit können entlang einer Laserschneidlinie herrschende Temperaturunterschiede berücksichtigt werden.

Nachfolgend werden Ausführungsbeispiele der Erfindung anhand der Zeichnungen näher erläutert. Es zeigen:
- Fig. 1: eine schematische Übersicht der wesentlichen Komponenten einer Laserschneidanlage,
- Fig. 2: eine schematische Übersicht einer Laserschneidanlage mit Bandkantensensoren,
- Fig. 3: ein Blockdiagramm, und
- Fig. 4: schematisch die Wirkung des erfindungsgemäßen Verfahrens.

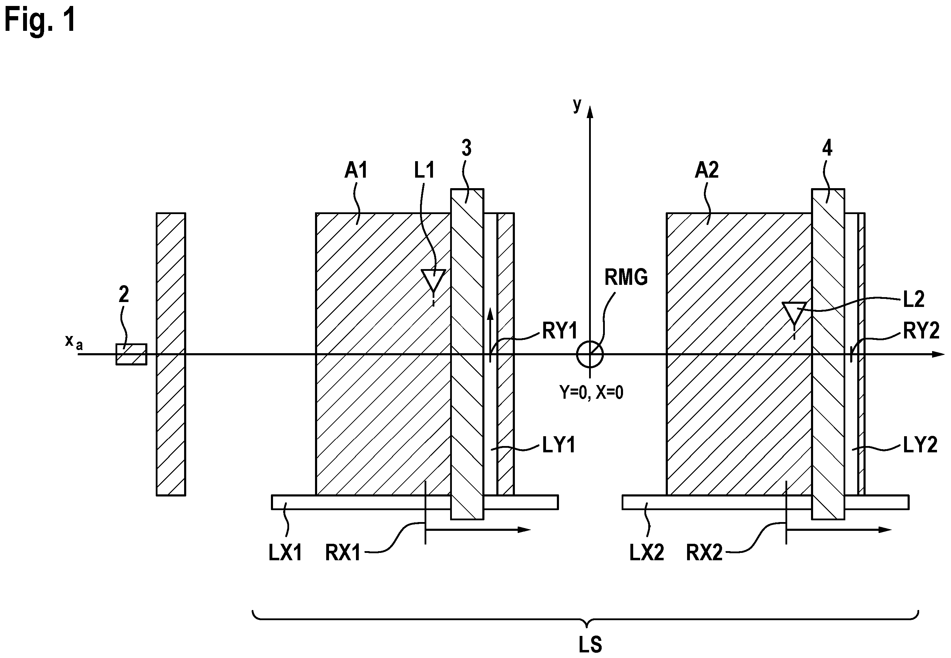

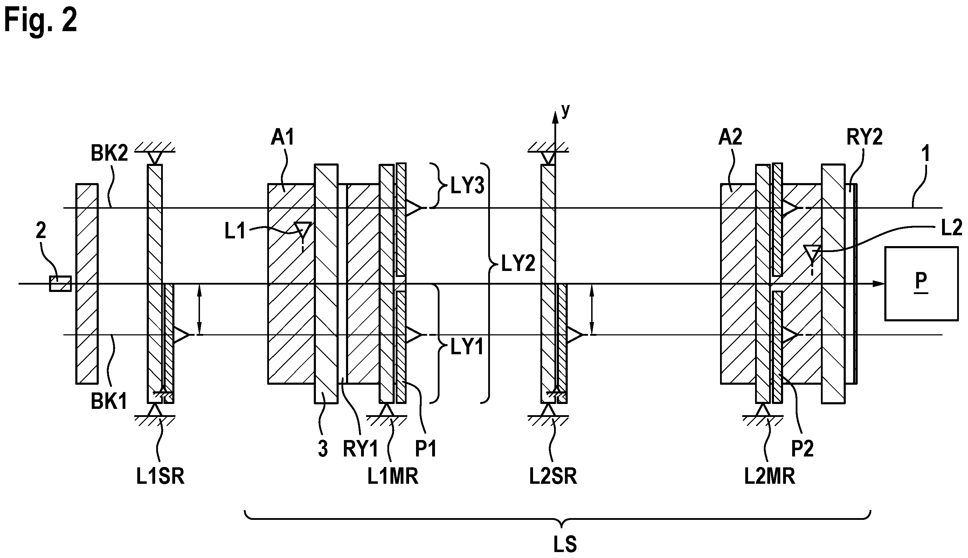

Fig. 1 und Fig. 2 zeigen schematisch Komponenten einer Laserschneidanlage. Mit dem Bezugszeichen 1 (siehe Fig. 2) ist ein Blechband bezeichnet, welches in einer x- bzw. Transportrichtung kontinuierlich transportiert wird.

Zum Transport des Blechbands 1 kann eine Fördereinrichtung (hier nicht gezeigt) verwendet werden, welche sich stromaufwärts einer Weg-Messeinrichtung 2 befindet. Bei der Fördereinrichtung kann es sich beispielsweise um eine Walzen-Richtmaschine oder einen Walzenvorschub handeln. Bei der Weg-Messeinrichtung 2 kann es sich beispielsweise um ein Messrad handeln.

Eine Platine P (siehe Fig. 2), welche stromabwärts einer Laserschneideinrichtung LS gezeigt ist, weist eine hier rechteckige Kontur auf.

Die Laserschneideinrichtung LS umfasst einen ersten Schneidlaser L1, welcher in x- und y-Richtung bewegbar an einer (hier nicht gezeigten) ersten Gantry 3 angebracht ist. Der erste Schneidlaser L1 kann im ersten Arbeitsbereich A1 in x- und y-Richtung bewegt werden. Zur Bestimmung einer x-Position des ersten Schneidlasers L1 ist eine erste x-Messeinrichtung LX1 vorgesehen, welche beispielsweise eine optische Messeinrichtung mit Linearmaßstab sein kann. Die erste x-Messeinrichtung LX1 ist an einem (hier nicht näher gezeigten) Maschinengestell an einem ersten x-Referenzpunkt RX1 befestigt. Zur Messung einer ersten y-Position des ersten Schneidlasers L1 ist eine erste y-Messeinrichtung LY1 vorgesehen, welche am (hier nicht gezeigten) Maschinengestell an einem ersten y-Referenzpunkt RY1 befestigt ist.

Stromabwärts des ersten Schneidlasers L1 ist ein zweiter Schneidlaser L2 vorgesehen, welcher analog zum ersten Schneidlaser L1 mittels einer zweiten Gantry 4 in einem zweiten Arbeitsbereich A2 in x- und y-Richtung hin und her bewegbar ist. Eine zweite x-Messeinrichtung ist mit dem Bezugszeichen LX2 und ein zweiter x-Referenzpunkt mit dem Bezugszeichen RX2 bezeichnet. Eine zweite y-Messeinrichtung ist mit dem Bezugszeichen LY2 und ein zweiter y-Referenzpunkt mit dem Bezugszeichen RY2 bezeichnet. Mit dem Bezugszeichen RMG ist ein Maschinengestell-Referenzpunkt bezeichnet.

In Fig. 2 sind die Bandkantensensoren näher gezeigt. Das Blechband 1 weist eine erste Bandkante BK1 und eine zweite Bandkante BK2 auf. Stromaufwärts des ersten Arbeitsbereichs A1 ist ein erster stationärer Bandkantensensor L1SR und zwischen dem ersten Arbeitsbereich A1 und dem zweiten Arbeitsbereich A2 ein zweiter stationärer Bandkantensensor L2SR vorgesehen. Innerhalb des ersten Arbeitsbereichs A1 ist ein erster mitfahrender Bandkantensensor L1MR vorgesehen, welcher entlang einer ersten Positionierachse P1 in y-Richtung verschiebbar ist. Innerhalb des zweiten Arbeitsbereichs A2 ist ein zweiter mitfahrender Bandkantensensor L2MR vorgesehen, welcher entlang einer zweiten Positionierachse P2 in y-Richtung verfahrbar ist.

Die hier gezeigten Bandkantensensoren L1SR, L2SR, L1MR, L2MR sind jeweils nur für die erste Bandkante BK1 gezeigt. Der Übersichtlichkeit halber sind jeweils gegenüber angeordnete weitere Bandkantensensoren zur Bestimmung der Position der zweiten Bandkante BK2 weggelassen.

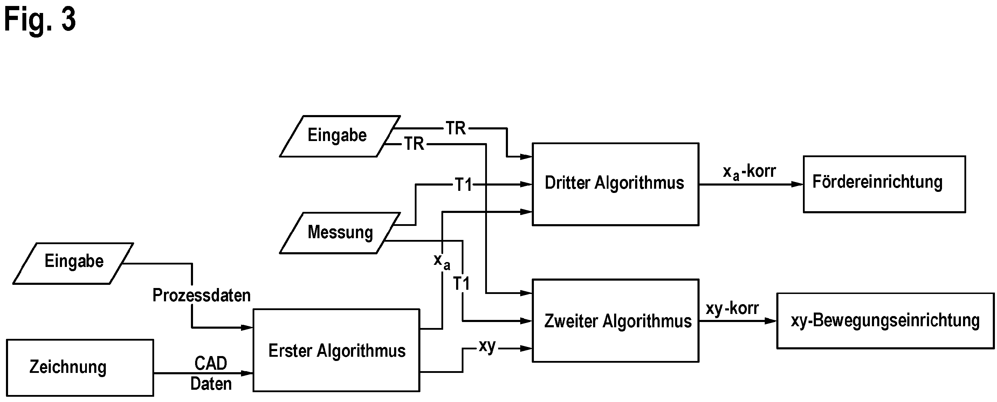

Das Verfahren wird nunmehr in Zusammensicht mit dem in Fig. 3 gezeigten Blockdiagramm näher erläutert.

Eine Soll-Kontur einer herzustellenden Platine P ist zunächst durch CAD-Daten definiert. Ein entsprechender Datensatz der CAD-Daten wird an einen ersten Algorithmus übergeben. Ferner werden Prozessdaten, beispielsweise eine Dicke eines zu schneidenden Blechs, eine Schneidgeschwindigkeit, Werkstoffeigenschaften, ein maximaler Transportweg, eine maximale Breite des Blechs und dgl., an den ersten Algorithmus übergeben. Auf der Grundlage dieser Daten werden mittels des ersten Algorithmus ein Transportweg xₐ sowie Schneidwegkoordinaten xy berechnet. Bei den Schneidwegkoordinaten xy handelt sich um Steuerdaten zur Steuerung der Bewegungen des ersten Schneidlasers L1 und des zweiten Schneidlasers L2 mittels der jeweiligen Gantries 3, 4. Erfindungsgemäß werden nun die nach dem ersten Algorithmus hergestellten Schneidwegkoordinaten xy in einem zweiten Algorithmus korrigiert. Dabei werden die gemessene erste aktuelle Temperatur T1 sowie die Referenz-Temperatur T_{R} verwendet, für welche die Soll-Kontur gilt. Der zweite Algorithmus liefert einen korrigierten Schneidweg xy-korr bzw. korrigierte Schneidwegkoordinaten, welche zur Ansteuerung der Bewegungseinrichtungen bzw. Gantries 3, 4 verwendet werden, mit denen die Schneidlaser L1, L2 bewegt werden.

Erfindungsgemäß werden die xₐ-Werte ferner zusammen mit der Referenz-Temperatur T_{R} und der gemessenen ersten aktuellen Temperatur T1 in einem dritten Algorithmus korrigiert. Der dritte Algorithmus liefert einen korrigierten Transportweg xₐ-korr. Mittels des korrigierten Transportwegs xₐ-korr wird die Fördereinrichtung zur Förderung des Blechbands 1 in x-Richtung gesteuert.

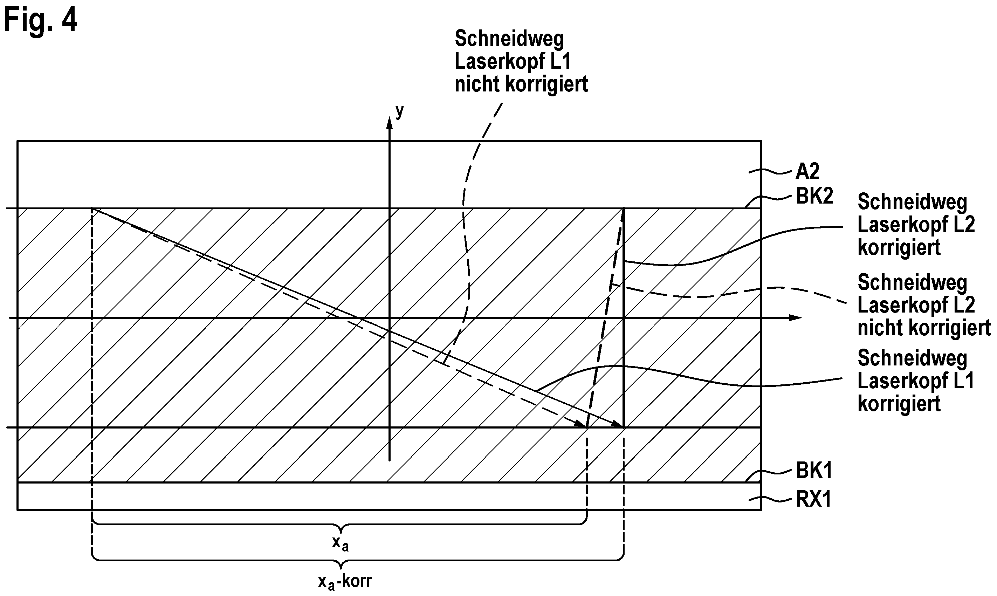

Fig. 4 zeigt schematisch den Einfluss der Korrektur des Transportwegs in x-Richtung. Gezeigt ist der Fall, bei dem ein nicht-korrigierter Transportweg xₐ kleiner ist als ein korrigierter Transportweg xₐ-korr. Die durch unterbrochene Linien kenntlichgemachten Schneidwege beziehen sich auf den Transportweg xₐ und die durch durchgezogene Linien kenntlich gemachten korrigierten Schneidwege beziehen sich auf den korrigierten Transportweg xₐ-korr.

Aus dem gezeigten Beispiel wird deutlich, dass bei Abweichung von einer oder mehreren Referenztemperaturen die nicht-korrigierten Schneidwege zu einer Schneidkontur führen, welche deutlich von der Soll-Kontur abweicht.

Erfindungsgemäß wird zur Verbesserung der Genauigkeit einer herzustellenden Soll-Kontur in Abhängigkeit der ersten aktuellen Temperatur ein korrigierter Schneidweg und ein dazu korrespondierender korrigierter Transportweg berechnet. Zur weiteren Verbesserung des Verfahrens können x- und/oder y-Messeinrichtungen anhand einer zweiten aktuellen Temperatur bezüglich ihrer Kalibrier-Temperaturen korrigiert werden. Ferner kann eine Lage der x- und/oder y-Messeinrichtungen innerhalb der Arbeitsbereiche bezüglich der zweiten aktuellen Temperatur korrigiert werden. Insoweit werden also temperaturbedingte geometrische Verformungen eines Maschinengestells berücksichtigt, an dem die x- und/oder y-Messeinrichtungen montiert sind.

In der Praxis kann es bei dem Transport des Blechbands 1 in x-Richtung dazu kommen, dass das Blechband 1 in y-Richtung sich hin- und herbewegt. Eine solche Bewegung kann beispielsweise durch eine Säbeligkeit des Blechbands 1 verursacht werden. Um auch insoweit eine Korrektur der Schneidwegdaten xy bzw. xy-korr vorzunehmen, können Messpositionen der Bandkantensensoren L1, L2 in Abhängigkeit der zweiten aktuellen Temperatur geändert werden. Damit kann eine aktuelle Lage der Bandkante BK präzise gemessen werden. Die Messwerte der aktuellen Lage der Bandkante BK können zu einer Korrektur der Schneidwegkoordinaten xy bzw. der korrigierten Schneidwegkoordinaten xy-korr verwendet werden. Das erhöht weiter die Genauigkeit des vorgeschlagenen Verfahrens.

### Bezugszeichenliste

- 1: Blechband
- 2: Weg-Messeinrichtung
- 3: erste Gantry
- 4: zweite Gantry

- A1: erster Arbeitsbereich
- A2: zweiter Arbeitsbereich
- BK1: erste Bandkante
- BK2: zweite Bandkante
- L1: erster Schneidlaser
- L1MR: erster mitfahrender Bandkantensensor
- L2: zweiter Schneidlaser
- L2MR: zweiter mitfahrender Bandkantensensor
- L1SR: erster stationärer Bandkantensensor
- L2SR: zweiter stationärer Bandkantensensor
- LS: Laserschneideinrichtung
- LX1: erster Linearmaßstab
- LX2: zweiter Linearmaßstab
- LY1: erste y-Messeinrichtung
- LY2: zweite y-Messeinrichtung
- P: Platine
- P1: erste Positionierachse
- P2: zweite Positionierachse
- RX1: erster x-Referenzpunkt
- RX2: zweiter x-Referenzpunkt
- RY1: erster y-Referenzpunkt
- RY2: zweiter y-Referenzpunkt
- xₐ: Transportweg
- xₐ-korr: korrigierter Transportweg
- xt: tatsächlicher Transportweg

## Patentansprüche

1. Verfahren zum Schneiden von Platinen (P) mit einer vorgegebenen Soll-Kontur aus einem kontinuierlich in einer Transportrichtung (x) transportierten Blechband (1) mit folgenden Schritten:
Bereitstellen eines die Soll-Kontur beschreibenden Datensatzes,
Berechnen eines Transportwegs (xa) und eines dazu korrespondierenden Schneidwegs (xy) mittels eines ersten Algorithmus,
Kontinuierliches Transportieren des Blechbands (1) mittels einer Fördereinrichtung zu einer stromabwärts angeordneten Laserschneideinrichtung (LS),
Schneiden der Platine entlang zumindest eines Schneidwegs (xy) aus dem Blechband (1) mittels der Laserschneideinrichtung (LS),
**dadurch gekennzeichnet,**
**dass** die Soll-Kontur auf genau eine Referenz-Temperatur (T_{R}) der Platine (P) bezogen wird,
**dass** eine erste aktuelle Temperatur (T1) des Blechbands (1) gemessen wird,
**dass** zur Herstellung der Soll-Kontur der Schneidweg (xy) in einem zweiten Algorithmus in Abhängigkeit der ersten aktuellen Temperatur (T1) bezüglich der Referenz-Temperatur (T_{R}) in einen korrigierten Schneidweg (xy-korr) korrigiert wird, und
**dass** der Transportweg (xₐ) des Blechbands (1) nach einem dritten Algorithmus in Abhängigkeit der ersten aktuellen Temperatur (T1) bezüglich der Referenz-Temperatur (T_{R}) in einen korrigierten Transportweg (xₐ-korr) korrigiert wird.

2. Verfahren nach Anspruch 1, wobei die Laserschneideinrichtung (LS) einen ersten Arbeitsbereich (A1) aufweist, wobei der erste Arbeitsbereich (A1) eine erste x-Messeinrichtung (LX1) zur Bestimmung einer x-Position eines ersten Schneidlasers (L1) aufweist, wobei der ersten x-Messeinrichtung (LX1) ein erster x-Referenzpunkt (RX1) zugewiesen wird, wobei im Bereich der Laserschneideinrichtung (LS) eine zweite aktuelle Temperatur (T2) gemessen wird, und wobei ein x-Abstand zwischen dem ersten x-Referenzpunkt (RX1) und einem Maschinengestell-Referenzpunkt (RMG) in Abhängigkeit der zweiten aktuellen Temperatur (T2) bezüglich einer vorgegebenen ersten Kalibrier-Temperatur (TK1) korrigiert wird.

3. Verfahren nach Anspruch 2 , wobei die Laserschneideinrichtung (LS) stromabwärts des ersten Arbeitsbereichs (A1) einen zweiten Arbeitsbereich (A2) aufweist, wobei der zweite Arbeitsbereich (A2) eine zweite x-Messeinrichtung (LX2) zur Bestimmung einer x-Position eines zweiten Schneidlasers (L2) aufweist, wobei der zweiten x-Messeinrichtung (LX2) ein zweiter x-Referenzpunkt (RX2) zugewiesen wird, und wobei ein x-Abstand zwischen dem zweiten x-Referenzpunkt (RX2) und dem Maschinengestell-Referenzpunkt (RMG) in Abhängigkeit der zweiten aktuellen Temperatur (T2) bezüglich der ersten Kalibrier-Temperatur (TK1) korrigiert wird.

4. Verfahren nach Anspruch 2 oder 3, wobei die erste x-Messeinrichtung (LX1) eine vorgegebene zweite Kalibrier-Temperatur (TK2) aufweist und unter Verwendung der zweiten aktuellen Temperatur (T2) bezüglich der zweiten Kalibrier-Temperatur (TK2) korrigiert wird und/oder die zweite x-Messeinrichtung (LX2) eine vorgegebene dritte Kalibrier-Temperatur (TK3) aufweist und unter Verwendung der zweiten aktuellen Temperatur (T2) bezüglich der dritten Kalibrier-Temperatur (TK3) korrigiert wird.

5. Verfahren nach einem der Ansprüche 2 bis 4, wobei der erste Arbeitsbereich (A1) eine erste y-Messeinrichtung (LY1) zur Bestimmung einer y-Position eines ersten Schneidlasers (L1) aufweist, wobei der ersten y-Messeinrichtung (LY1) ein erster y-Referenzpunkt (RY1) zugewiesen wird, und wobei ein y-Abstand zwischen dem ersten y-Referenzpunkt (RY1) und dem Maschinengestell-Referenzpunkt (RMG) in Abhängigkeit der zweiten aktuellen Temperatur (T2) bezüglich der ersten Kalibrier-Temperatur (TK1) korrigiert wird.

6. Verfahren nach einem der Ansprüche 3 bis 5, wobei der zweite Arbeitsbereich (A2) eine zweite y-Messeinrichtung (LY2) zur Bestimmung einer y-Position eines zweiten Schneidlasers (L2) aufweist, wobei der zweiten y-Messeinrichtung (LY2) ein zweiter y-Referenzpunkt (RY2) zugewiesen wird, und wobei ein y-Abstand zwischen dem zweiten y-Referenzpunkt (RY2) und dem Maschinengestell-Referenzpunkt (RMG) in Abhängigkeit der zweiten aktuellen Temperatur (T2) bezüglich der ersten Kalabrier-Temperatur (TK1) korrigiert wird.

7. Verfahren nach Anspruch 5 oder 6, wobei die erste y-Messeinrichtung (LY1) eine vorgegebene vierte Kalibrier-Temperatur (KT4) aufweist und die erste y-Messeinrichtung (LY1) unter Verwendung der zweiten aktuellen Temperatur (T2) bezüglich der vierten Kalibrier-Temperatur (KT4) korrigiert wird und/oder die zweite y-Messeinrichtung (LY2) eine vorgegebene fünfte Kalibrier-Temperatur (KT5) aufweist und die zweite y-Messeinrichtung (LY2) unter Verwendung der zweiten aktuellen Temperatur (T2) bezüglich der fünften Kalibrier-Temperatur (KT5) korrigiert wird.

8. Verfahren nach einem der vorhergehenden Ansprüche, wobei zur Messung einer oder mehrerer der aktuellen Temperaturen (T1, T2) mehrere Temperatursensoren verwendet werden und als aktuelle Temperatur (T1, T2) ein Durchschnittwert aus den mit den Temperatursensoren gemessen Werten verwendet wird.

9. Verfahren nach einem der vorhergehenden Ansprüche, wobei Bandkantensensoren (L1MR, L2MR) zur Erfassung der y-Positionen (Y1, Y2) von Bandkanten des Blechbands (1) vorgesehen sind, wobei die Bandkantensensoren (L1MR, L2MR) mit einer Vorrichtung zum Verstellen der jeweiligen Messposition in y-Richtung versehen sind, wobei die Messpositionen der Bandkantensensoren (L1MR, L2MR) in Abhängigkeit der zweiten aktuellen Temperatur (T2) bezüglich einer sechsten Kalibrier-Temperatur (TK6) korrigiert werden.

10. Verfahren nach einem der vorhergehenden Ansprüche, wobei ein tatsächlicher Transportweg (xt) mittels einer Weg-Messeinrichtung (2) gemessen und der tatsächliche Transportweg (xt) als Ist-Wert zur Regelung des Transportwegs (xa) verwendet wird.

11. Verfahren nach einem Anspruch 10, wobei als Weg-Messeinrichtung (2) ein Messrad verwendet wird, wobei ein Durchmesser (D) des Messrads in Abhängigkeit einer dritten aktuellen Temperatur (T3) bezüglich einer vorgegebenen siebten Kalibrier-Temperatur (TK7) korrigiert wird.

12. Verfahren nach einem der vorhergehenden Ansprüche, wobei die erste (T1) und/oder die dritte aktuelle Temperatur (T3) stromaufwärts der Laserschneidvorrichtung (LS) gemessen wird.

## Claims

1. Method for cutting blanks (P) with a predetermined target contour from a sheet metal strip (1) transported continuously in a transport direction (x), comprising the following steps:
providing a data set describing the target contour,
calculating a transport path (xₐ) and a corresponding cutting path (xy) using a first algorithm,
continuous transportation of the sheet metal strip (1) by means of a conveyor to a laser cutting device (LS) arranged downstream,
cutting the blank along at least one cutting path (xy) from the sheet metal strip (1) by means of the laser cutting device (LS),
**characterized in that**
the target contour is related to exactly one reference temperature (T_{R}) of the blank (P),
a first current temperature (T1) of the metal strip (1) is measured,
the cutting path (xy) is corrected in a second algorithm as a function of the first current temperature (T1) with respect to the reference temperature (T_{R}) into a corrected cutting path (xy-corr) in order to produce the desired target contour, and
the transport path (xₐ) of the sheet metal strip (1) is corrected into a corrected transport path (xₐ-corr) according to a third algorithm as a function of the first current temperature (T1) with respect to the reference temperature (T_{R}).

2. Method according to claim 1, wherein the laser cutting device (LS) has a first working area (A1), wherein the first working area (A1) has a first x-measuring device (LX1) for determining an x-position of a first cutting laser (L1), wherein a first x-reference point (RX1) is assigned to the first x-measuring device (LX1), wherein a second current temperature (T2) is measured in the region of the laser cutting device (LS), and wherein an x axis distance between the first x-reference point (RX1) and a machine frame reference point (RMG) is corrected as a function of the second current temperature (T2) with respect to a predetermined first calibration temperature (TK1).

3. Method according to claim 2, wherein the laser cutting device (LS) has a second working area (A2) downstream of the first working area (A1), wherein the second working area (A2) has a second x-measuring device (LX2) for determining an x-position of a second cutting laser (L2), wherein a second x-reference point (RX2) is assigned to the second x-measuring device (LX2), and wherein an x axis distance between the second x-reference point (RX2) and the machine frame reference point (RMG) is corrected as a function of the second current temperature (T2) with respect to the first calibration temperature (TK1).

4. Method according to claim 2 or 3, wherein the first x-measuring device (LX1) has a predetermined second calibration temperature (TK2) and is corrected with respect to the second calibration temperature (TK2) using the second current temperature (T2) and/or the second x-measuring device (LX2) has a predetermined third calibration temperature (TK3) and is corrected with respect to the third calibration temperature (TK3) using the second current temperature (T2).

5. Method according to any one of claims 2 to 4, wherein the first working area (A1) comprises a first y-measuring device (LY1) for determining a y-position of a first cutting laser (L1), wherein a first y-reference point (RY1) is assigned to the first y-measuring device (LY1), and wherein a y axis distance between the first y-reference point (RY1) and the machine frame reference point (RMG) is corrected as a function of the second current temperature (T2) with respect to the first calibration temperature (TK1).

6. Method according to any one of claims 3 to 5, wherein the second working area (A2) comprises a second y-measuring device (LY2) for determining a y-position of a second cutting laser (L2), wherein a second y-reference point (RY2) is assigned to the second y-measuring device (LY2), and wherein a y axis distance between the second y-reference point (RY2) and the machine frame reference point (RMG) is corrected as a function of the second current temperature (T2) with respect to the first calibration temperature (TK1).

7. Method according to claim 5 or 6, wherein the first y-measuring device (LY1) has a predetermined fourth calibration temperature (KT4) and the first y-measuring device (LY1) is corrected with respect to the fourth calibration temperature (KT4) using the second current temperature (T2) and/or the second y-measuring device (LY2) has a predetermined fifth calibration temperature (KT5) and the second y-measuring device (LY2) is corrected with respect to the fifth calibration temperature (KT5) using the second current temperature (T2).

8. Method according to any one of the preceding claims, wherein several temperature sensors are used to measure one or more of the current temperatures (T1, T2) and an average value from the values measured with the temperature sensors is used as the current temperature (T1, T2).

9. Method according to any one of the preceding claims, wherein strip edge sensors (L1MR, L2MR) are provided for detecting the y-positions (Y1, Y2) of strip edges of the sheet metal strip (1), wherein the strip edge sensors (L1MR, L2MR) are provided with a device for adjusting the respective measuring position in the y axis direction, the measuring positions of the strip edge sensors (L1MR, L2MR) being corrected as a function of the second current temperature (T2) with respect to a sixth calibration temperature (TK6).

10. Method according to any one of the preceding claims, wherein an actual transport path (xt) is measured by means of a displacement measuring device (2) and the actual transport path (xt) is used as the actual value for controlling the transport path (xa).

11. Method according to claim 10, wherein a measuring wheel is used as the displacement measuring device (2), wherein a diameter (D) of the measuring wheel is corrected as a function of a third current temperature (T3) with respect to a predetermined seventh calibration temperature (TK7).

12. Method according to any one of the preceding claims, wherein the first current temperature (T1) and/or the third current temperature (T3) is measured upstream of the laser cutting device (LS).

## Revendications

1. Procédé de découpe de plaques (P) aux contours de consigne prédéfinis dans une bande de tôle (1) transportée en continu dans une direction de transport (x) comprenant les étapes suivantes :
la fourniture d'un ensemble de données décrivant le contour de consigne,
le calcul d'un trajet de transport (xₐ) et d'un trajet de coupe (xy) y correspondant à l'aide d'un premier algorithme,
le transport continu de la bande de tôle (1) au moyen d'un dispositif de transport vers un dispositif de découpe laser (LS) disposé en aval,
la découpe de la plaque le long d'au moins un trajet de coupe (xy) dans la bande de tôle (1) au moyen du dispositif de découpe laser (LS),
**caractérisé**
**en ce que** le contour de consigne se rapporte exactement à une température de référence (T_{R}) de la plaque (P),
**en ce qu'**une première température actuelle (T1) de la bande de tôle (1) est mesurée,
**en ce que**, pour la fabrication du contour de consigne, le trajet de coupe (xy) est corrigé dans un deuxième algorithme en fonction de la première température actuelle (T1) par rapport à la température de référence (T_{R}) dans un trajet de coupe corrigé (xy-korr), et
**en ce que** le trajet de transport (xₐ) de la bande de tôle (1) est corrigé selon un troisième algorithme en fonction de la première température actuelle (T1) par rapport à la température de référence (T_{R}) dans un trajet de transport corrigé (xₐ-korr).

2. Procédé selon la revendication 1, en ce que le dispositif de découpe laser (LS) présente une première zone de travail (A1), en ce que la première zone de travail (A1) comporte un premier dispositif de mesure x (LX1) destiné à déterminer une position x d'un premier laser de découpe (L1), en ce qu'un premier point de référence x (RX1) est attribué au premier dispositif de mesure x (LX1), en ce qu'une deuxième température actuelle (T2) est mesurée dans la zone du dispositif de découpe laser (LS), et en ce qu'une distance x entre le premier point de référence x (RX1) et un point de référence du bâti de la machine (RMG) est corrigée en fonction de la deuxième température actuelle (T2) par rapport à une première température d'étalonnage (TK1) prédéfinie.

3. Procédé selon la revendication 2, en ce que le dispositif de découpe laser (LS) comporte en aval de la première zone de travail (A1) une deuxième zone de travail (A2), en ce que la deuxième zone de travail (A2) comporte un deuxième dispositif de mesure x (LX2) destiné à déterminer une position x d'un deuxième laser de découpe (L2), en ce qu'un deuxième point de référence x (RX2) est attribué au deuxième dispositif de mesure x (LX2), et en ce qu'une distance x entre le deuxième point de référence x (RX2) et le point de référence du bâti de la machine (RMG) est corrigée en fonction de la deuxième température actuelle (T2) par rapport à la première température d'étalonnage (TK1).

4. Procédé selon la revendication 2 ou 3, en ce que le premier dispositif de mesure x (LX1) présente une deuxième température d'étalonnage (TK2) prédéfinie et est corrigé à l'aide de la deuxième température actuelle (T2) par rapport à la deuxième température d'étalonnage (TK2) et/ou le deuxième dispositif de mesure x (LX2) présente une troisième température d'étalonnage (TK3) prédéfinie et est corrigé à l'aide de la deuxième température actuelle (T2) par rapport à la troisième température d'étalonnage (TK3).

5. Procédé selon l'une des revendications 2 à 4, en ce que la première zone de travail (A1) comporte un premier dispositif de mesure y (LY1) destiné à déterminer une position y d'un premier laser de découpe (L1), en ce qu'un premier point de référence y (RY1) est attribué au premier dispositif de mesure y (LY1), et en ce qu'une distance y entre le premier point de référence y (RY1) et le point de référence du bâti de la machine (RMG) est corrigée en fonction de la deuxième température actuelle (T2) par rapport à la première température d'étalonnage (TK1).

6. Procédé selon l'une des revendications 3 à 5, en ce que la deuxième zone de travail (A2) comporte un deuxième dispositif de mesure y (LY2) destiné à déterminer une position y d'un deuxième laser de découpe (L2), en ce qu'un deuxième point de référence y (RY2) est attribué au deuxième dispositif de mesure y (LY2), et en ce qu'une distance y entre le deuxième point de référence y (RY2) et le point de référence du bâti de la machine (RMG) est corrigée en fonction de la deuxième température actuelle (T2) par rapport à la première température d'étalonnage (TK1).

7. Procédé selon la revendication 5 ou 6, en ce que le premier dispositif de mesure y (LY1) présente une quatrième température d'étalonnage (KT4) prédéfinie et le premier dispositif de mesure y (LY1) est corrigé à l'aide de la deuxième température actuelle (T2) par rapport à la quatrième température d'étalonnage (KT4) et/ou le deuxième dispositif de mesure y (LY2) présente une cinquième température d'étalonnage (KT5) prédéfinie et le deuxième dispositif de mesure y (LY2) est corrigé à l'aide de la deuxième température actuelle (T2) par rapport à la cinquième température d'étalonnage (KT5).

8. Procédé selon l'une des revendications précédentes, en ce que plusieurs capteurs de température sont utilisés pour mesurer une ou plusieurs températures actuelles (T1, T2) et en ce qu'une valeur moyenne des valeurs mesurées avec les capteurs de température est utilisée comme température actuelle (T1, T2).

9. Procédé selon l'une des revendications précédentes, en ce que des capteurs de bords de bande (L1MR, L2MR) sont prévus pour la détection des positions y (Y1, Y2) des bords de bande de la bande de tôle (1), en ce que les capteurs de bords de bande (L1MR, L2MR) sont équipés d'un dispositif de réglage de la position de mesure respective dans le sens y, en ce que les positions de mesure des capteurs de bords de bande (L1MR, L2MR) sont corrigées en fonction de la deuxième température actuelle (T2) par rapport à une sixième température d'étalonnage (TK6).

10. Procédé selon l'une des revendications précédentes, en ce qu'un trajet de transport réel (xt) est mesuré au moyen d'un dispositif de mesure de trajet (2) et le trajet de transport réel (xt) est utilisé comme valeur réelle pour le réglage du trajet de transport (xₐ).

11. Procédé selon la revendication 10, en ce qu'une roue de mesure est utilisée comme dispositif de mesure de trajet (2), en ce qu'un diamètre (D) de la roue de mesure est corrigé en fonction d'une troisième température actuelle (T3) par rapport à une septième température d'étalonnage (TK7) prédéfinie.

12. Procédé selon l'une des revendications précédentes, en ce que la première (T1) et/ou la troisième température actuelle (T3) est mesurée en amont du dispositif de découpe laser (LS).
